# EUROPEAN PATENT SPECIFICATION

(11) **EP 2 338 660 B1**
(45) Date of publication and mention of the grant of the patent: **06.09.2017**
(21) Application number: 10195484.0
(22) Date of filing: 16.12.2010
(51) Int. Cl.: B29C 47/50, B29C 47/42, B29B 7/48, B29C 47/92, B29C 47/06, B29C 47/10, B29D 30/62

(54) **Apparatus and method for applying rubber mixture on a core**
Vorrichtung und Verfahren zum Aufbringen von Kautschukmischung auf einen Kern
Appareil et méthode pour l'application de mélange de caoutchouc sur un noyau

(30) Priority: 23.12.2009 US 289637 P; 19.11.2010 US 950255
(43) Date of publication of application: 29.06.2011
(73) Proprietor: The Goodyear Tire & Rubber Company, Akron, OH 44316-0001 (US)
(72) Inventor: Burg, Gary Robert, Massillon, OH 44646 (US); Endres, Christian, 200122 Pudong Shanghai (CN)
(74) Representative: Kutsch, Bernd

(56) References cited:
- EP-A1- 0 485 127
- EP-A1- 2 039 492
- EP-A2- 0 970 797
- EP-A2- 2 177 342
- WO-A1-03/078135
- WO-A1-2004/007172
- WO-A1-2009/062525
- DE-A1-102005 050 619
- JP-A- 2004 216 725
- JP-A- 2004 216 826

## Description

### Field of the Invention

The invention relates in general to the mixing of rubber compounds for use in tire manufacturing, and more particularly to continuous production of custom rubber mixtures.

### Background of the Invention

Tire manufacturers have progressed to more complicated designs due to an advance in technology as well as a highly competitive industrial environment. In particular, tire designers seek to use multiple rubber compounds in a tire in order to meet customer demands. Using multiple rubber compounds per tire can result in a huge number of compounds needed to be on hand for the various tire lines of the manufacturer. For cost and efficiency reasons, tire manufacturers seek to limit the number of compounds available due to the extensive costs associated with each compound. Each compound typically requires the use of a Banbury mixer, which involves expensive capital expenditures. Furthermore, Banbury mixers have difficulty mixing up tough or stiff rubber compounds. The compounds generated from the Banbury mixers are typically shipped to the tire building plants, thus requiring additional costs for transportation. The shelf life of the compounds is not finite, and if not used within a certain time period, is scrapped.

Thus an improved method and apparatus is desired which substantially reduces the need for the use of Banbury mixers while providing an apparatus and methodology to provide custom mixing at the tire building machine by blending of two or more compounds together, and controlling the ratio of the compounds and other additives. Both non-productive compounds and productive compounds could be blended together. It is further desired to have a system at the tire building machine which provides for the ability to manufacture customizable compounds with accelerators. Yet an additional problem to be solved is to generate the compounds continuously at the tire building machine.

WO-A-2009/062525 describes an apparatus in accordance with the preamble of claim 1.

JP-A- 2004-216725 describes a method of applying a blended rubber composition on a substrate, the method comprising the steps of providing a first extruder and a first gear pump for a first compound, a second extruder and a second gear pump for a second compound, and mixing together the first compound and the second compound.

Further methods and apparatuses for mixing rubber compounds using extruders are described in DE-A- 10 2005 050 619 and EP-A- 0 970 797.

WO-A-03/078135 describes a multi-screw extruder for the processing/treating of an elastomer such as rubber compounds. The multi-screw extruder may be a ring extruder.

EP-A-2 039 492 describes an apparatus for applying a mixture of a first compound and a second compound. The apparatus comprises a main extruder with a first gear pump and a second extruder with a second gear pump. An output from the second gear pump is fed into the main extruder.

### Summary of the Invention

The invention provides in a first aspect an apparatus for applying mixtures of a first compound and a second compound in accordance with claim 1.

The invention provides in a second aspect a method of applying a blended rubber composition on a tire building drum or core in accordance with claim 7.

Dependent claims refer to preferred embodiments of the invention.

### Definitions

"Circumferential" means lines or directions extending along the perimeter of the surface of the annular tread perpendicular to the axial direction; it can also refer to the direction of the sets of adjacent circular curves whose radii define the axial curvature of the tread as viewed in cross section.

"Productive compound" means a rubber compound that includes accelerators, sulfur and other materials needed to cure the rubber.

"Non-productive compound" means a rubber compound that does not have one or more of the following items: 1) accelerator; 2) sulfur; or 3) curing agent(s).

### Brief Description of the Drawings

The invention will be described by way of example and with reference to the accompanying drawings in which:
FIG. 1 is a schematic of a mixing system of the present invention.
FIG. 2 is a schematic of a second embodiment of the present invention.

### Detailed Description of the Invention

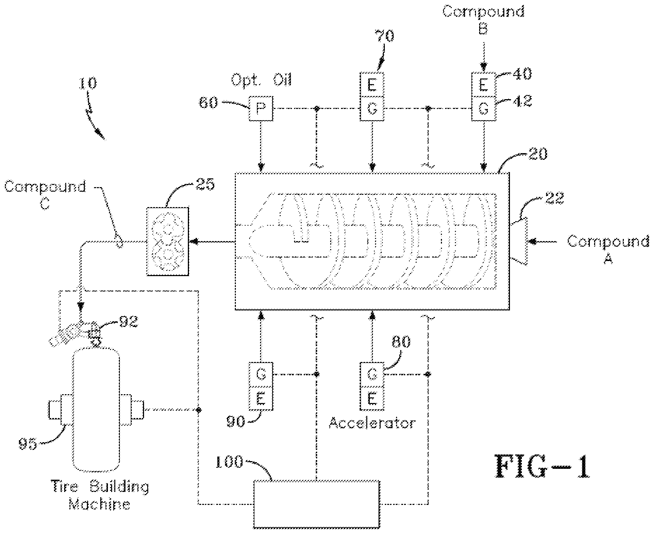

Figure 1 illustrates a first embodiment of a method and apparatus 10 for a continuous mixing system suitable for use for making rubber compositions for tires or tire components. The continuous mixing system is not limited to tire applications and may be used for example, to make other rubber components not related to tires such as conveyors, hoses and belts. The mixing system is provided directly at the tire building machinery for direct application of the rubber composition to a tire building drum or other tire building apparatus such as a manifold. As shown in Figure 1, a continuous mixing apparatus 10 is shown and which includes a first or main extruder 20. The main extruder 20 has an inlet 22 for receiving a first compound A, which may be a productive or non-productive rubber composition. The main extruder comprises a ring type of extruder. Preferably, the extruder has an UD of about 8, or in a range from 5 to 25, preferably 10-15. The main extruder 20 functions to warm up the compound A to the temperature in the range of 80°C to 150°C, preferably 90°C to 120°C, and to masticate the rubber composition as needed.

A second compound, referred to as "Compound B" enters the extruder 20 and is mixed with compound A. Compound B may also comprise a productive or non-productive rubber composition. Examples of compound B compositions are described in more detail, below. Compound B is first extruded by second extruder 40 and by a second gear pump 42. The extruder 40 may be a conventional pin type, ring type, dual screw or single screw type extruder. The pump 42 functions as a metering device and a pump and has gears such as planetary gears, bevel gears or other gears. The extruder 40 and gear pump 42 may be a combination unit. Compound B enters the main extruder in a range of from 15% to 45% the length of the extruder as measured from the entrance 22.

The main extruder 20 blends compound A and compound B together in a precisely controlled amount. Oil is injected into the main extruder 22 via an oil pump 60. The oil pump may be located at any desired location. The oil controls the viscosity of the compound mixture.

The apparatus 10 further includes a first additive pump 70 for pumping one or more additives such as a primary accelerator, which may be optionally added to the mixture at the main extruder 22 or at a gear pump 25. The apparatus may further include a second additive pumping device 80 for pumping one or more additives such as a secondary accelerator into the main extruder 20 or in the gear pump 25. The apparatus may further include a third additive pumping device 90 for pumping one or more additives such as a third accelerator into the main extruder 20 or in the gear pump 25. The additive pumps 70, 80, 90 may be gear pumps, gear pump extruders, venturi pumps or other pumping means.

If more than one accelerator is used, they may be added into the mixture separately or together. For example, a primary accelerator and a secondary accelerator may both be added. Accelerators are used to control the time and/or temperature required for vulcanization and to improve the properties of the rubber. The accelerator may be in powder form or an encapsulated powder into a resin or rubber base. Examples of accelerator compositions are described in more detail, below.

Other additives include a curative agent or precursor, which may also be added to the mixer via additive pump 90. One example of a curative agent is sulfur. The sulfur may be added in solid form.

The main extruder 20 produces an output mixture of compound C which is a precise mixture of the A and B compound, optional oil the optional accelerant and optional additives. The output mixture of compound C exits the main extruder and enters a gear pump 25. The gear pump 25 is preferably located adjacent a tire building station 95 for direct application onto a core, tire blank buffed carcass for a retreaded tire or tire building drum, as shown in Figure 1. Gear pump 25 preferably has a nozzle 92 or shaping die which applies the compound formulation output from the gear pump 25 directly onto the tire building machine 95 in strips which are wound onto a tire building drum or core.

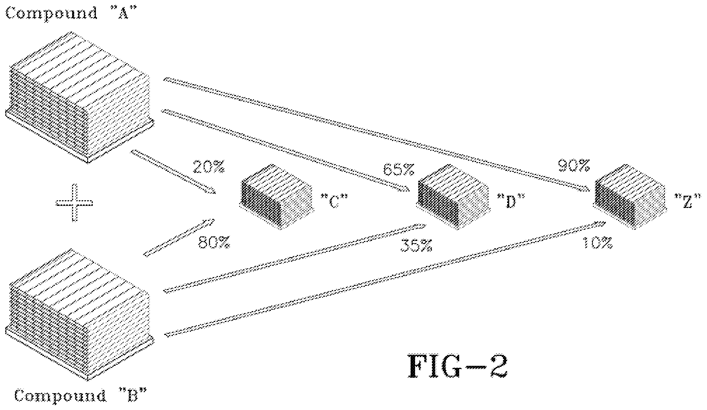

The ratio of the volumetric flow rate of compound A to the volumetric flow rate of compound B is precisely controlled by the ratio of the speed of the gear pump 25 for compound A and the speed of gear pump 42 for compound B. For example, the compound output from the system 10 may comprise a ratio of 20% of compound A and 80% of compound B by volume, as shown in Figure 2. Alternatively, the compound output from the system may comprise a mixture D having a ratio of 35% of compound B and 65% of compound A by volume. Alternatively, the compound output from the system may comprise a mixture Z having a ratio of 10% of compound B and 90% of compound A by volume. The ratio of compound A to compound B can thus range from 0:100% to 100%:0. The ratio may be adjusted instantaneously by varying the speeds of gear pumps 25 and 42 by a computer controller 100. The computer controller 100 may additionally control the extruder and gear pump operating parameters such as operating pressure, operating temperature, pump or screw speed.

Preferably, the computer controller 100 sets a pressure target value for the exit pressure of each extruder. The extruder speed is controlled by the controller, and is varied until the pressure target is met. The pressure target value affects the quality of mixing by causing backflow of the material in the extruder.

The following are compositions which may be used in conjunction with the invention.

### I. Accelerator Compositions

In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanized rubber. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

### II. Rubber Compositions

Representative rubbers that may be used in the rubber compound include acrylonitrile/diene copolymers, natural rubber, halogenated butyl rubber, butyl rubber, cis-1,4-polyisoprene, styrene-butadiene copolymers, cis-1,4-polybutadiene, styrene-isoprene-butadiene terpolymers ethylene-propylene terpolymers, also known as ethylene/propylene/diene monomer (EPDM), and in particular ethylene/propylene/dicyclopentadiene terpolymers. Mixtures of the above rubbers may be used. Each rubber layer may be comprised of the same rubber composition or alternating layers may be of different rubber composition.

The rubber compound may contain a platy filler. Representative examples of platy fillers include talc, clay, mica and mixture thereof. When used, the amount of platy filler ranges from 25 to 150 parts per 100 parts by weight of rubber (hereinafter referred to as phr). Preferably, the level of platy filler in the rubber compound ranges from 30 to 75 phr.

The various rubber compositions may be compounded with conventional rubber compounding ingredients. Conventional ingredients commonly used include carbon black, silica, coupling agents, tackifier resins, processing aids, antioxidants, antiozonants, stearic acid, activators, waxes, oils, sulfur vulcanizing agents and peptizing agents. As known to those skilled in the art, depending on the desired degree of abrasion resistance, and other properties, certain additives mentioned above are commonly used in conventional amounts. Typical additions of carbon black comprise from 10 to 150 parts by weight of rubber, preferably 50 to 100 phr. Typical amounts of silica range from 10 to 250 parts by weight, preferably 30 to 80 parts by weight and blends of silica and carbon black are also included. Typical amounts of tackifier resins comprise from 2 to 10 phr. Typical amounts of processing aids comprise 1 to 5 phr. Typical amounts of antioxidants comprise 1 to 10 phr. Typical amounts of antiozonants comprise 1 to 10 phr. Typical amounts of stearic acid comprise 0.50 to 3 phr. Typical amounts of accelerators comprise 1 to 5 phr. Typical amounts of waxes comprise 1 to 5 phr. Typical amounts of oils comprise 2 to 30 phr. Sulfur vulcanizing agents, such as elemental sulfur, amine disulfides, polymeric polysulfides, sulfur olefin adducts, and mixtures thereof, are used in an amount ranging from 0.2 to 8 phr. Typical amounts of peptizers comprise from 0.1 to 1 phr.

### III. Oil

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

## Claims

1. An apparatus for applying a blended mixture of a first compound and a second compound, directly onto a tire building drum or a tire building core, the apparatus comprising:
a first, main extruder (20) in fluid communication with a first gear pump (25) for processing a first compound (A), the main extruder (20) having an inlet (22) for receiving the first compound (A);
a second extruder (40) in fluid communication with a second gear pump (42) for processing a second compound (B),
wherein an output from the second gear pump (42) is fed into the main extruder (20);
and a computer controller (100) for controlling the mixture ratio of the first compound (A) to the second compound (B);
wherein the main extruder (20) is a ring type extruder and the first gear pump (25) comprises or is in fluid communication with a nozzle or shaping die (92) for applying the mixture of the first and second compound directly onto the tire building drum or the tire building core; and wherein an oil pump (60) is provided for injecting oil into the main extruder (20) and an additive pump (70) is provided for adding one or more additives to the compound mixture at the main extruder (20) or at the first gear pump (25); **characterized in that** the output from the second gear pump (42) is fed into the main extruder (20) at a location in a range of from 15% to 45% of the length of the main extruder (20) as measured from the inlet (22).

2. The apparatus of claim 1 further comprising a third gear pump (80) in fluid communication with the main extruder (20) for injecting an accelerator mixture into the main extruder (20).

3. The apparatus of at least one of the previous claims wherein the computer controller (100) is in electrical communication with the first and second gear pump (25, 42) and the main and second extruder (20, 40).

4. The apparatus of claim 2 wherein the computer controller (100) is in electrical communication with the first, second and third gear pump (25, 42) and the main and second extruder (20, 40).

5. The apparatus of at least one of the previous claims further comprising a fourth gear pump (80) and a respective fourth extruder in fluid communication with the fourth gear pump (80).

6. The apparatus of claim 5 further comprising a fifth gear pump and a respective fifth extruder (90) in fluid communication with the fifth gear pump.

7. A method of applying a blended rubber composition directly onto a tire building drum or a tire building core, the method comprising the steps of:
providing a first extruder (20) and a first gear pump (25) for a first compound (A) wherein the first extruder (20) is a ring type extruder, wherein the first extruder (20) is the main extruder (20) and has an inlet (22) for receiving the first compound (A);
providing a second extruder (42) and a second gear pump (40) for a second compound (B); providing a computer controller (100) for controlling the mixture ratio of the first compound (A) to the second compound (B); directing the output of the second gear pump (40) to the first extruder (20); and
mixing together the first compound (A) and the second compound (B) wherein the first gear pump (25) comprises or is in fluid communication with a nozzle or shaping die (92) which applies the mixture of the first and second compound directly onto the tire building drum or the tire building core; wherein an oil pump (60) is provided for injecting oil into the main extruder (20) and an additive pump (70) is provided for adding one or more additives to the compound mixture at the main extruder (20) or at the first gear pump (25); **characterized in that** the output from the second gear pump (42) is fed into the main extruder (20) at a location in a range of from 15% to 45% of the length of the main extruder (20) as measured from the inlet (22).

8. The method of claim 7, further comprising:
providing a third extruder and a third gear pump (80) for an accelerator mixture; and
mixing together the first compound (A) and the second compound (B) and the accelerator mixture.

9. The method of claim 8 further comprising:
providing the third extruder and the third gear pump (80) downstream of a first mixing of the first compound (A) and the second compound (B).

10. The method of at least one of the claims 7 to 9, further comprising applying one or more strips of the blended rubber composition directly onto the tire building drum or core and/or using an apparatus in accordance with at least one of the claims 1 to 6.

11. The method of claim 7, further comprising adjusting the speed of the first gear pump (25) and the second gear pump (40) to provide a desired mixture of the first compound (A) to the second compound (B), and mixing together the mixture in a mixing chamber with an accelerator.

## Patentansprüche

1. Vorrichtung zum Aufbringen einer gemischten Mischung einer ersten Verbindung und einer zweiten Verbindung unmittelbar auf eine Reifenaufbautrommel oder einen Reifenaufbaukern, wobei die Vorrichtung aufweist:
einen ersten Hauptextruder (20) in Fluidkommunikation mit einer ersten Zahnradpumpe (25) zum Verarbeiten einer ersten Verbindung (A), wobei der Hauptextruder (20) einen Einlass (22) zum Aufnehmen der ersten Verbindung (A) hat;
einen zweiten Extruder (40) in Fluidkommunikation mit einer zweiten Zahnradpumpe (42) zum Verarbeiten einer zweiten Verbindung (B),
wobei eine Ausgabe aus der zweiten Zahnradpumpe (42) dem Hauptextruder (20) zugeführt wird;
und eine Computersteuerung (100) zum Steuern des Mischungsverhältnisses der ersten Verbindung (A) zu der zweiten Verbindung (B);
wobei der Hauptextruder (20) ein Extruder vom Ringtyp ist und die erste Zahnradpumpe (25) eine Düse oder ein Umformwerkzeug (92) zum Aufbringen der Mischung aus der ersten und zweiten Verbindung unmittelbar auf die Reifenaufbautrommel oder den Reifenaufbaukern aufweist oder in Fluidkommunikation damit steht;
und wobei eine Ölpumpe (60) zum Injizieren von Öl in den Hauptextruder (20) vorgesehen ist und eine Additivpumpe (70) zum Hinzugeben eines oder mehrerer Additive zu der Verbindungsmischung an den Hauptextruder (20) oder an die erste Zahnradpumpe (25) vorgesehen ist;
**dadurch gekennzeichnet, dass** die Ausgabe aus der zweiten Zahnradpumpe (42) dem Hauptextruder (20) an einem Ort in einem Bereich von ab 15 % bis 45 % der Länge des Hauptextruder (20), wie gemessen ab dem Einlass (22), zugeführt wird.

2. Vorrichtung nach Anspruch 1, ferner aufweisend eine dritte Zahnradpumpe (80) in Fluidkommunikation mit dem Hauptextruder (20) zum Injizieren einer Beschleunigungsmischung in den Hauptextruder (20).

3. Vorrichtung nach zumindest einem der vorherigen Ansprüche, wobei die Computersteuerung (100) in elektrischer Kommunikation mit der ersten und zweiten Zahnradpumpe (25, 42) und dem Haupt- und dem zweiten Extruder (20, 40) steht.

4. Vorrichtung nach Anspruch 2, wobei die Computersteuerung (100) in elektrischer Kommunikation mit der ersten, zweiten und dritten Zahnradpumpe (25, 42) und dem Haupt- und dem zweiten Extruder (20, 40) steht.

5. Vorrichtung nach zumindest einem der vorherigen Ansprüche, ferner aufweisend eine vierte Zahnradpumpe (80) und entsprechend einen vierten Extruder in Fluidkommunikation mit der vierten Zahnradpumpe (80).

6. Vorrichtung nach Anspruch 5, ferner aufweisend eine fünfte Zahnradpumpe und entsprechend einen fünften Extruder (90) in Fluidkommunikation mit der fünften Zahnradpumpe.

7. Verfahren zum Aufbringen einer gemischten Gummizusammensetzung unmittelbar auf eine Reifenaufbautrommel oder einen Reifenaufbaukern, wobei das Verfahren die Schritte aufweist von:
Bereitstellen eines ersten Extruders (20) und einer ersten Zahnradpumpe (25) für eine erste Verbindung (A), wobei der erste Extruder (20) ein Extruder vom Ringtyp ist, wobei der erste Extruder (20) der Hauptextruder (20) ist und einen Einlass (22) zur Aufnahme der ersten Verbindung (A) hat;
Bereitstellen eines zweiten Extruders (42) und einer zweiten Zahnradpumpe (40) für eine zweite Verbindung (B);
Bereitstellen einer Computersteuerung (100) zum Steuern des Mischungsverhältnisses der ersten Verbindung (A) zu der zweiten Verbindung (B);
Leiten der Ausgabe der zweiten Zahnradpumpe (40) zu dem ersten Extruder (20); und
Zusammenmischen der ersten Verbindung (A) und der zweiten Verbindung (B), wobei die erste Zahnradpumpe (25) eine Düse oder ein Umformwerkzeug (92), welches die Mischung aus der ersten und zweiten Verbindung unmittelbar auf die Reifenaufbautrommel oder den Reifenaufbaukern aufbringt, aufweist oder damit in Fluidkommunikation steht;
wobei eine Ölpumpe (60) zum Injizieren von Öl in den Hauptextruder (20) vorgesehen ist und eine Additivpumpe (70) zum Hinzugeben eines oder mehrerer Additive zu der Verbindungsmischung an dem Hauptextruder (20) oder an der ersten Zahnradpumpe (25) vorgesehen ist;
**dadurch gekennzeichnet, dass** die Ausgabe aus der zweiten Zahnradpumpe (42) dem Hauptextruder (20) an einem Ort in einem Bereich von ab 15 % bis 45 % der Länge des Hauptextruders (20), wie gemessen ab dem Einlass (22), zugeführt wird.

8. Verfahren nach Anspruch 7, ferner aufweisend:
Bereitstellen eines dritten Extruders und einer dritten Zahnradpumpe (80) für eine Beschleunigungsmischung; und
Zusammenmischen der ersten Verbindung (A) und der zweiten Verbindung (B) und der Beschleunigungsmischung.

9. Verfahren Anspruch 8, ferner aufweisen:
Bereitstellen des dritten Extruders und der dritten Zahnradpumpe (80) stromabwärts einer ersten Mischung der ersten Verbindung (A) und der zweiten Verbindung (B).

10. Verfahren nach zumindest einem der Ansprüche 7 bis 9, ferner aufweisend Aufbringen einer oder mehrerer Streifen der gemischten Gummizusammensetzung unmittelbar auf die Reifenaufbautrommel oder -Kern und/oder Verwenden einer Vorrichtung gemäß zumindest einem der Ansprüche 1 bis 6.

11. Verfahren nach Anspruch 7, ferner aufweisend Einstellen der Geschwindigkeit der ersten Zahnradpumpe (25) und der zweiten Zahnradpumpe (40), um eine gewünschte Mischung der ersten Verbindung (A) zu der zweiten Verbindung (B) bereitzustellen, und Zusammenmischen der Mischung in einer Mischkammer mit einem Beschleuniger.

## Revendications

1. Appareil d'application d'un mélange homogénéisé d'un premier composé et d'un second composé directement sur un tambour de fabrication de pneus ou un noyau de fabrication de pneus, l'appareil comprenant :
une première extrudeuse principale (20) en communication fluidique avec une première pompe à engrenages (25) pour traiter un premier composé (A), l'extrudeuse principale (20) ayant une entrée (22) pour recevoir le premier composé (A) ;
une deuxième extrudeuse (40) en communication fluidique avec une deuxième pompe à engrenages (42) pour traiter un second composé (B),
dans lequel une sortie de la deuxième pompe à engrenage (42) est acheminée dans l'extrudeuse principale (20) ; et
un dispositif de commande informatique (100) pour commander le rapport de mélange du premier composé (A) au second composé (B) ;
dans lequel l'extrudeuse principale (20) est une extrudeuse de type annulaire et la première pompe à engrenages (25) comprend ou est en communication fluidique avec une buse ou une filière de façonnage (92) pour appliquer le mélange du premier et du second composé directement sur le tambour de fabrication de pneus ou le noyau de fabrication de pneus ; et
dans lequel une pompe à huile (60) est prévue pour injecter de l'huile dans l'extrudeuse principale (20) et une pompe à additif(s) (70) est prévue pour ajouter un ou plusieurs additifs au mélange de composés dans l'extrudeuse principale (20) ou dans la première pompe à engrenages (25) ;
**caractérisé en ce que** la sortie de la deuxième pompe à engrenages (42) est acheminée dans l'extrudeuse principale (20) à un emplacement qui se situe dans une plage de 15 % à 45 % de la longueur de l'extrudeuse principale (20) telle qu'elle est mesurée à partir de l'entrée (22).

2. Appareil selon la revendication 1, comprenant en outre une troisième pompe à engrenages (80) en communication fluidique avec l'extrudeuse principale (20) pour injecter un mélange d'accélérateur dans l'extrudeuse principale (20).

3. Appareil selon au moins l'une quelconque des revendications précédentes, dans lequel le dispositif de commande informatique (100) est en communication électrique avec la première et la deuxième pompe à engrenages (25, 42) et l'extrudeuse principale et la seconde extrudeuse (20, 40).

4. Appareil selon la revendication 2, dans lequel le dispositif de commande informatique (100) est en communication électrique avec la première, la deuxième et la troisième pompe à engrenages (25, 42) et l'extrudeuse principale et la seconde extrudeuse (20, 40).

5. Appareil selon au moins l'une quelconque des revendications précédentes, comprenant en outre une quatrième pompe à engrenages (80) et une quatrième extrudeuse respective en communication fluidique avec la quatrième pompe à engrenages (80).

6. Appareil selon la revendication 5, comprenant en outre une cinquième pompe à engrenages et une cinquième extrudeuse respective (90) en communication fluidique avec la cinquième pompe à engrenages.

7. Procédé d'application d'une composition de caoutchouc homogénéisée directement sur un tambour de fabrication de pneus ou un noyau de fabrication de pneus, le procédé comprenant les étapes consistant à :
fournir une première extrudeuse (20) et une première pompe à engrenages (25) pour un premier composé (A), dans lequel la première extrudeuse (20) est une extrudeuse de type annulaire, dans lequel la première extrudeuse (20) est l'extrudeuse principale (20) et a une entrée (22) pour recevoir le premier composé (A) ;
fournir une deuxième extrudeuse (42) et une deuxième pompe à engrenages (40) pour un second composé (B) ;
fournir un dispositif de commande informatique (100) pour commander le rapport de mélange du premier composé (A) au second composé (B) ;
diriger la sortie de la deuxième pompe à engrenages (40) vers la première extrudeuse (20) ; et
mélanger conjointement le premier composé (A) et le second composé (B), dans lequel la première pompe à engrenages (25) comprend ou est en communication fluidique avec une buse ou une filière de façonnage (92) qui applique le mélange du premier et du second composé directement sur le tambour de fabrication de pneus ou le noyau de fabrication de pneus ;
dans lequel une pompe à huile (60) est prévue pour injecter de l'huile dans l'extrudeuse principale (20) et une pompe à additif(s) (70) est prévue pour ajouter un ou plusieurs additifs au mélange de composés dans l'extrudeuse principale (20) ou dans la première pompe à engrenages (25) ;
**caractérisé en ce que** la sortie de la deuxième pompe à engrenages (42) est acheminée dans l'extrudeuse principale (20) à un emplacement qui se situe dans une plage de 15 % à 45 % de la longueur de l'extrudeuse principale (20) telle qu'elle est mesurée à partir de l'entrée (22).

8. Procédé selon la revendication 7, comprenant en outre :
la fourniture d'une troisième extrudeuse et d'une troisième pompe à engrenages (80) pour un mélange d'accélérateur ; et
le mélange conjoint du premier composé (A) et du second composé (B) et du mélange d'accélérateur.

9. Procédé selon la revendication 8, comprenant en outre :
la fourniture de la troisième extrudeuse et de la troisième pompe à engrenages (80) en aval d'un premier mélange du premier composé (A) et du second composé (B).

10. Procédé selon au moins l'une quelconque des revendications 7 à 9, comprenant en outre l'application d'une ou plusieurs bandes de la composition de caoutchouc homogénéisée directement sur le tambour ou le noyau de fabrication de pneus et/ou l'utilisation d'un appareil selon au moins l'une quelconque des revendications 1 à 6.

11. Procédé selon la revendication 7, comprenant en outre l'ajustement de la vitesse de la première pompe à engrenages (25) et de la deuxième pompe à engrenages (40) pour fournir un mélange souhaité du premier composé (A) au second composé (B) et le mélange conjoint du mélange dans une chambre de mélange avec un accélérateur.
